(19) Europäisches Patentamt
European Patent Office
Office européen des brevets

(11) **EP 2 057 024 B1**

(12) **EUROPÄISCHE PATENTSCHRIFT**

(45) Veröffentlichungstag und Bekanntmachung des Hinweises auf die Patenterteilung:
**24.02.2010 Patentblatt 2010/08**

(21) Anmeldenummer: **07765591.8**

(22) Anmeldetag: **25.06.2007**

(51) Int Cl.:
***B60G 17/04*** *(2006.01)*

(86) Internationale Anmeldenummer:
**PCT/EP2007/056295**

(87) Internationale Veröffentlichungsnummer:
**WO 2008/022825 (28.02.2008 Gazette 2008/09)**

(54) **VERFAHREN ZUR STEUERUNG EINES BEDARFSABHÄNGIG EIN- UND AUSSCHALTBAREN KOMPRESSORS EINER LUFTFEDERUNGSANLAGE**

METHOD FOR CONTROLLING A COMPRESSOR, WHICH CAN BE ACTIVATED AND DEACTIVATED ON DEMAND, OF AN AIR SPRING SYSTEM

PROCEDE DE COMMANDE D'UN COMPRESSEUR DE SUSPENSION PNEUMATIQUE POUVANT ETRE ACTIVE ET DESACTIVE EN FONCTION DES BESOINS

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **23.08.2006 DE 102006039538**

(43) Veröffentlichungstag der Anmeldung:
**13.05.2009 Patentblatt 2009/20**

(73) Patentinhaber: **Continental Aktiengesellschaft 30165 Hannover (DE)**

(72) Erfinder: **ENGELHARDT, Marek 36289 Friedewald (DE)**

(74) Vertreter: **Finger, Karsten Continental Aktiengesellschaft Patente und Lizenzen Postfach 169 30001 Hannover (DE)**

(56) Entgegenhaltungen:
EP-A- 0 941 876    EP-A2- 0 943 468
DE-A1- 4 030 475    DE-A1- 4 333 591
DE-A1- 10 330 121    DE-A1- 10 331 600
DE-A1- 10 354 491    DE-C2- 19 621 946

**EP 2 057 024 B1**

**Beschreibung**

Die Erfindung betrifft ein Verfahren zur Steuerung eines bedarfsabhängig ein- und ausschaltbaren Kompressors einer Luftfederungsanlage eines Kraftfahrzeuges, mit dem Luftfedern der Luftfederungsanlage befüllbar sind, bei dem

- die Temperatur der in dem Kompressor verdichteten Luft nach einem Temperaturmodell berechnet wird, und
- der eingeschaltete Kompressor maximal solange eingeschaltet bleibt, bis die berechnete Temperatur der verdichteten Luft auf einen ersten Grenzwert angestiegen ist, und
- der ausgeschaltete Kompressor frühestens dann wieder einschaltbar ist, wenn die berechnete Temperatur der Luft in dem Kompressor auf einen zweiten Grenzwert abgesunken ist.

Die Erfindung betrifft ferner eine Luftfederungsanlage für ein Kraftfahrzeug mit einem Kompressor, mit dem die Luftfedern der Luftfederungsanlage befüllbar sind.

In jüngster Zeit werden Kraftfahrzeuge häufig mit einer Luftfederung versehen, da diese es erlaubt, die Höhe des Fahrzeugaufbaus unabhängig vom Beladungszustand des Kraftfahrzeuges konstant zu halten. Ferner werden häufig Geländefahrzeuge mit einer Luftfederung ausgestattet, da mit Hilfe der Luftfederung der Fahrzeugaufbau für eine Geländefahrt einfach angehoben werden kann. Soll der Fahrzeugaufbau nach einer Beladung des Kraftfahrzeuges oder für eine Geländefahrt angehoben werden, so werden die Luftfedern von einem Kompressor mit Druckluft befüllt. Während der Einschaltzeiten des Kompressors tritt in dem Kompressor eine Wärmeentwicklung auf, die dort zu einem Temperaturanstieg führt. Bei einem zu starken Temperaturanstieg in dem Kompressor kann es zu einer Beschädigung des Kompressors kommen. Es ist deshalb wichtig, den Kompressor im eingeschalteten Zustand vor einer zu großen Wärmeentwicklung zu schützen.

Aus der DE 196 21 946 C2 ist ein Verfahren der eingangs genannten Art bekannt. Bei dem aus dieser Druckschrift bekannten Verfahren wird für die aktuelle Betriebstemperatur des Kompressors ständig ein Schätzwert vorgegeben. Bei eingeschaltetem Kompressor wird der letzte Schätzwert jeweils nach einer vorgegebenen Zeitspanne um eine vorgegebene geringe Temperaturdifferenz erhöht und bei ausgeschaltetem Kompressor wird der letzte Schätzwert der Temperatur jeweils nach einer vorgegebenen Zeitspanne um eine vorgegebene geringe Temperaturdifferenz erniedrigt. Wenn der so berechnete Schätzwert des eingeschalteten Kompressors einen oberen Schwellwert überschreitet, wird der Kompressor abgeschaltet. Nach dem Abschalten kann der Kompressor wieder eingeschaltet werden, wenn der Schätzwert einen unteren Schwellwert überschreitet.

Mit dem aus der DE 196 21 946 C2 bekannten Verfahren kann der Kompressor im eingeschalteten Zustand zuverlässig vor einer zu großen Wärmeentwicklung geschützt werden. Es ist jedoch festzustellen, dass bei dem Verfahren nicht berücksichtigt wird, dass der Kompressor Bauteile aufweist, die sich unterschiedlich schnell erhitzen bzw. abkühlen. Insbesondere bei modernen Kompressoren ist es häufig so, dass der Kolben des Kompressors aus Kunststoff hergestellt ist und nach einem Kompressorlauf wesentlich schlechter abkühlen kann als der Zylinderkopf. Die Bauteile des Kompressors, die sich langsam abkühlen, sind besonders wärmeempfindlich und können leichter beschädigt werden als die anderen Bauteile.

Der Erfindung liegt die Aufgabe zugrunde, ein Verfahren zur Steuerung eines bedarfsabhängig ein- und ausschaltbaren Kompressors einer Luftfederungsanlage eines Kraftfahrzeuges zu schaffen, bei dem einerseits alle Bauteile des Kompressors gut vor Schäden aufgrund einer zu großen Wärmeentwicklung geschützt sind und andererseits die Kompressorlaufzeiten möglichst optimiert, d. h., möglichst lang sind. Der Erfindung liegt ferner die Aufgabe zugrunde, eine Luftfederungsanlage zu schaffen, mit der das Verfahren durchgeführt werden kann.

Die Aufgabe wird gemäß den kennzeichnenden Merkmalen des Anspruchs 1 dadurch gelöst, dass

- in dem Verfahren ein erster Lauf für den Kompressor festgelegt ist, der dadurch definiert ist, dass die Luft in dem Kompressor die Temperatur der Umgebung des Kompressors aufweist, und dass
- für den ersten Lauf des Kompressors für die Berechnung der Temperatur der Luft in dem Kompressor ein anderes Temperaturmodell zugrunde gelegt wird, als für die nachfolgenden Läufe des Kompressors.

Die Aufgabe wird ebenfalls durch den nebengeordneten Anspruch 11 gelöst.

Bei dem Begriff "Temperaturmodell" im Sinne der Anmeldung handelt es sich um ein Rechenmodell, mit dem der Temperaturanstieg bzw. die Temperaturabnahme der Luft in dem Kompressor berechnet werden kann. Ein erstes Temperatumiodell unterscheidet sich dann von einem zweiten Temperaturmodell, wenn dem ersten Temperaturmodell ein komplett anderes Rechenmodell zugrunde liegt als dem zweiten Temperaturmodell oder wenn bei dem ersten Temperaturmodell das gleiche Rechenmodell wie bei dem zweiten Temperaturmodell gewählt wird, in dem Rechenmodell jedoch andere Parameter verwendet werden.

Der Vorteil der Erfindung wird verständlich, wenn man folgendes bedenkt: Bei dem ersten Lauf des Kompressors wird davon ausgegangen, dass sämtliche Bauteile in dem Kompressor die gleiche Temperatur, nämlich die Umgebungstemperatur des Kompressors, aufweisen. Für den ersten Lauf des Kompressors kann für die Berechnung der Temperatur der Luft in dem Kompressor deshalb ein Temperaturmodell gewählt werden, gemäß dem die Temperatur langsamer ansteigt, als für die nachfolgenden Läufe des Kompressors. Demgegenüber muss für die nachfolgenden Läufe des Kompressors ein Temperaturmodell gewählt werden, gemäß dem die Temperatur der Luft in dem Kompressor schneller ansteigt, um zu berücksichtigen, dass sich bestimmte Bauteile in dem Kompressor schlechter abkühlen als andere Bauteile des Kompressors (näheres siehe Figurenbeschreibung).

Der mit der Erfindung erzielte Vorteil ist also insbesondere darin zu sehen, dass sich durch die Wahl eines anderen Temperaturmodells für den ersten Kompressorlauf die Laufzeit des ersten Kompressorlaufes wesentlich verlängern lässt. Ein weiterer Vorteil der Erfindung ist darin zu sehen, dass die Temperatur der Luft in dem Kompressor bei allen Kompressorläufen ausschließlich mit Hilfe eines Temperaturmodells berechnet wird und Temperaturmessungen nicht erfolgen. Ein Temperatursensor, mit dem die Luft in dem Kompressor gemessen wird, ist daher nicht notwendig.

Gemäß einer Weiterbildung der Erfindung nach Anspruch 2 wird für den ersten Lauf des Kompressors der positive Temperaturgradient, d. h., der Wert für den Temperaturanstieg/Zeit zwischen dem zweiten Grenzwert und dem ersten Grenzwert kleiner gewählt als für die nachfolgenden Läufe des Kompressors. Der Vorteil dieser Weiterbildung ist darin zu sehen, dass für die Berechnung der Temperatur der Luft in dem Kompressor ein einfaches Temperaturmodell zugrunde gelegt werden kann (linearer Anstieg der Temperatur mit einem Temperaturgradienten) und dass für den ersten Lauf des Kompressors lediglich ein kleinerer Temperaturgradient festgelegt wird als für die nachfolgenden Läufe des Kompressors.

Gemäß einer Weiterbildung der Erfindung nach Anspruch 3 steigt der positive Temperaturgradient für die ersten n Läufe des Kompressors schrittweise an. Der Vorteil dieser Weiterbildung ist darin zu sehen, dass die Laufzeit des Kompressors nicht nur für den ersten Lauf optimiert wird, sondern für die n ersten Läufe des Kompressors (näheres siehe Figurenbeschreibung).

Gemäß einer Weiterbildung der Erfindung nach Anspruch 4 wird der positive Temperaturgradient ab dem n+1 Lauf des Kompressors konstant gehalten. Mit der Weiterbildung gemäß Anspruch 4 wird berücksichtigt, dass sich das Temperaturverhalten der Luft in dem Kompressor ab einem bestimmten Kompressorlauf "einschwingt", so dass der positive Temperaturgradient konstant gehalten werden kann. Der Vorteil der Weiterbildung ist darin zu sehen, dass der positive Temperaturgradient, der für den n+1 Lauf gewählt wird, optimal auf den diesen Zustand abgestimmt werden kann. Üblicherweise schwingt sich das Temperaturverhalten des Kompressors nach dem dritten bis zehnten Lauf ein (n ist also 3 oder 10 oder eine ganze Zahl dazwischen).

Gemäß einer Weiterbildung der Erfindung nach Anspruch 5 wird bei dem Verfahren davon ausgegangen, dass die Luft in dem Kompressor die Temperatur der Umgebung des Kompressors aufweist, wenn der ausgeschaltete Kompressor für eine bestimmte Zeit nicht wieder eingeschaltet wird. Als bestimmte Zeit wird vorzugsweise eine Zeit gewählt, die zwischen 5 und 15 Minuten liegt. Der Vorteil dieser Weiterbildung ist darin zu sehen, dass die Zeit, in der der Kompressor nicht wieder eingeschaltet wird, einfach bestimmt werden kann und nach Ablauf der Zeit trotzdem zuverlässig davon ausgegangen werden kann, dass die Luft in dem Kompressor die Temperatur der Umgebung des Kompressors aufweist. Als Umgebungstemperatur kann nach Ablauf der bestimmten Zeit ein Temperaturwert angenommen werden, den die Umgebung des Kraftfahrzeuges typischerweise maximal einnehmen kann (z. B. für 40 ° C).

Gemäß einer Weiterbildung der Erfindung nach Anspruch 6 wird die Umgebungstemperatur mit einem Steuergerät des Kraftfahrzeuges gemessen und das Temperaturmodell für den ersten Lauf des Kompressors in Abhängigkeit von der Umgebungstemperatur festgelegt. Die Weiterbildung macht sich zu Nutze, dass die meisten Kraftfahrzeuge einen Sensor aufweisen, mit dem die Umgebungstemperatur gemessen werden kann. Durch die Weiterbildung wird der Vorteil erreicht, dass die Laufzeit für den ersten Lauf des Kompressors unter Zugrundelegung der tatsächlichen Umgebungstemperatur weiter verbessert werden kann.

Gemäß einer Weiterbildung der Erfindung nach Anspruch 7 wird für die erste Ausschaltzeit des Kompressors für die Berechnung der Temperatur der Luft in dem Kompressor ein anderes Temperaturmodell zugrunde gelegt als für die nachfolgenden Ausschaltzeiten des Kompressors. Durch die Weiterbildung wird der Vorteil erreicht, dass die erste Ausschaltzeit des Kompressors verkürzt werden kann und der Kompressor für den nächsten Lauf schneller zur Verfügung steht.

Gemäß einer Weiterbildung der Erfindung nach Anspruch 8 wird für die erste Ausschaltzeit des Kompressors der negative Temperaturgradient, d. h., der Wert für die Temperaturabnahme/Zeit, für die Berechnung der Temperatur der Luft in dem Kompressor in dem Temperaturbereich zwischen dem ersten Grenzwert und dem zweiten Grenzwert kleiner gewählt als für die nachfolgenden Ausschaltzeiten des Kompressors. Der Vorteil dieser Weiterbildung ist darin zu sehen, dass für die Abnahme der Temperatur in dem Kompressor ein einfaches Temperaturmodell gewählt wird und dennoch die erste Ausschaltzeit stark verkürzt werden kann.

Gemäß einer Weiterbildung der Erfindung nach Anspruch 9 steigt der negative Temperaturgradient für die ersten n Ausschaltzeiten des Kompressors schrittweise an. Der Vorteil der Weiterbildung ist darin zu sehen, dass der negative Temperaturgradient an die Temperaturabnahme während der n ersten Ausschaltzeiten des Kompressors schrittweise angepasst werden kann, so dass die Ausschaltzeiten optimal verkürzt werden können.

Gemäß einer Weiterbildung der Erfindung nach Anspruch 10 wird der negative Temperaturgradient ab der n+1 Ausschaltzeit des Kompressors konstant gehalten. Ab der n+1 Ausschaltzeit des Kompressors ist der zeitliche Verlauf der Temperaturabnahme während einer Ausschaltzeit annähernd immer gleich. Der Vorteil dieser Weiterbildung ist darin zu sehen, dass ab der n+1 Ausschaltzeit immer das gleiche Temperaturmodell mit dem gleichen negativen Temperaturgradienten gewählt wird und dennoch die Ausschaltzeiten des Kompressors optimal bemessen sind.

Ein Ausführungsbeispiel und weitere Vorteile der Erfindung werden im Zusammenhang mit den nachfolgenden Figuren erläutert, darin zeigt:

Fig. 1    eine Luftfederung in schematischer Darstellung

Fig. 2    ein Diagramm

Fig. 3    ein Diagramm.

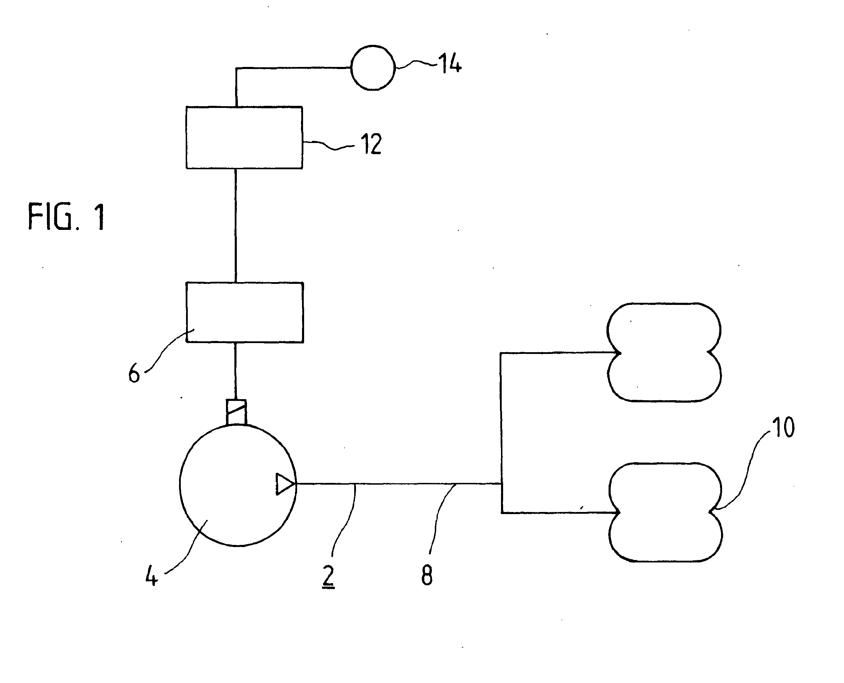

Fig. 1 zeigt in stark schematisierter Darstellung eine Luftfederung 2 eines Kraftfahrzeuges mit einem Kompressor 4, einer Steuereinheit 6 und Luftfedern 10, die über Versorgungsleitungen 8 mit Hilfe des Kompressors 4 mit Druckluft gefüllt werden können. In der Fig. 1 sind nur die für die Erfindung notwendigen Details gezeigt. Der Kompressor 4 ist durch die Steuereinheit 6 ein- und ausschaltbar. Im eingeschalteten Zustand kommt es in dem Kompressor 4 zu einer Wärmeentwicklung und in Folge dessen zu einer Temperaturerhöhung. Die Temperatur der verdichteten Luft in dem Kompressor wird von der Steuereinheit 6 nach einem Temperaturmodell berechnet. Wenn die Temperatur der Luft in dem Kompressor bis auf einen ersten Grenzwert angestiegen ist, schaltet die Steuereinheit 6 den Kompressor aus. Nach dem Ausschalten wird in der Steuereinheit 6 berechnet, wie die Temperatur der Luft in dem Kompressor absinkt. Wenn die berechnete Temperatur der Luft in dem Kompressor auf einen zweiten unteren Grenzwert abgesunken ist, kann der Kompressor 4 von der Steuereinheit 6 für eine weitere Befüllung der Luftfedern 10 eingeschaltet werden, falls dies notwendig ist.

Die Steuereinheit 6 ist mit einer weiteren Steuereinheit 12 des Kraftfahrzeuges verbunden, die mit einem Temperatursensor 14 in Verbindung steht. Mit dem Temperatursensor 14 kann die Umgebungstemperatur gemessen und an die Steuereinheit 12 weitergegeben werden. Die Steuereinheit 12 gibt die gemessene Umgebungstemperatur an die Steuereinheit 6 der Luftfederungsanlage weiter. Dort wird sie bei dem ersten Lauf des Kompressors zur Berechnung der Temperatur der Luft in dem Kompressor nach einem Temperaturmodell berücksichtigt.

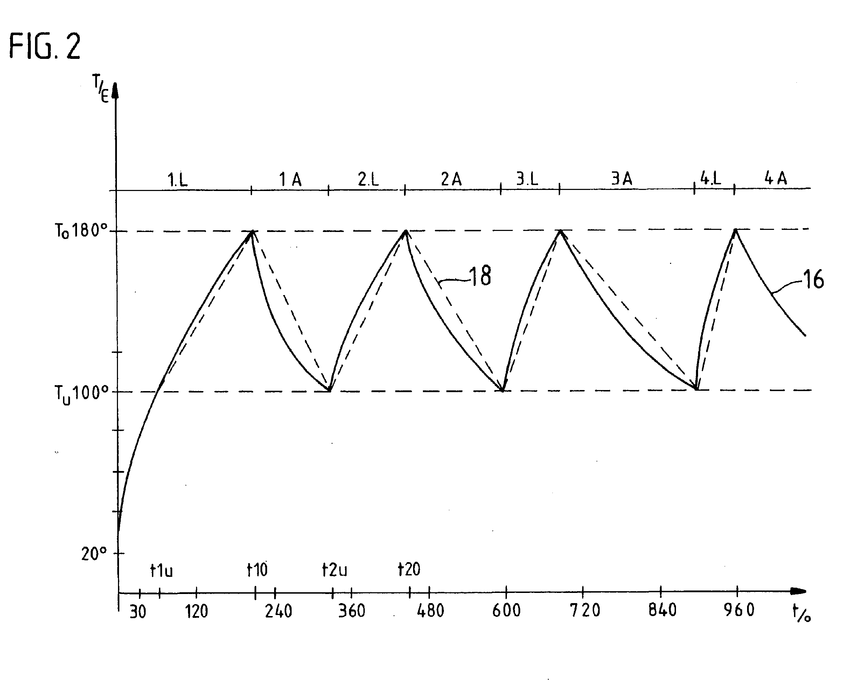

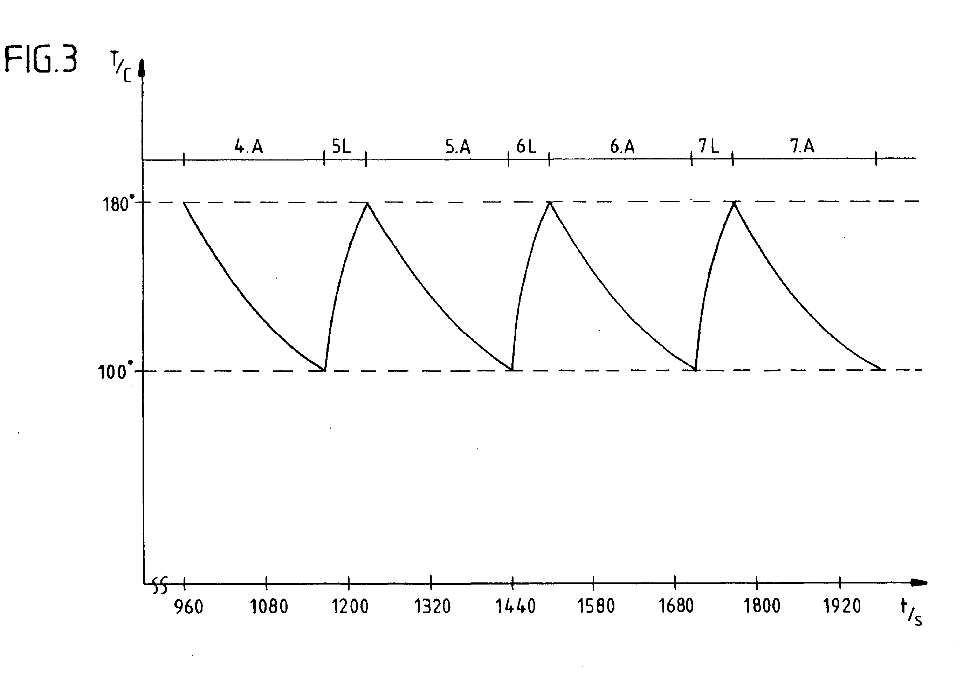

Durch die Berechnung der Temperatur der Luft in dem Kompressor in der Steuereinheit 6 kann auf einen Temperatursensor, mit dem die Temperatur der Luft in dem Kompressor gemessen wird, verzichtet werden. Darüber hinaus ist der Kompressor durch das frühzeitige Abschalten bei Erreichen der ersten oberen Grenztemperatur zuverlässig vor Überhitzung geschützt. Nach einem Lauf des Kompressors können sich die unterschiedlichen Bauteile des Kompressors jedoch unterschiedlich schnell abkühlen. So kühlt sich beispielsweise ein Kolben aus Kunststoff langsamer ab als der metallische Zylinderkopf des Kompressors. Die unterschiedlich schnelle Abkühlung der Bauteile des Kompressors sollte bei der Berechnung der Temperatur der Luft in dem Kompressor berücksichtigt werden, um den Kompressor 4 mit optimalen Laufzeiten betreiben zu können. Wie dies im Einzelnen erfolgt, wird im Folgenden im Zusammenhang mit den Figuren 2 und 3 erläutert.

Fig. 2 zeigt ein Diagramm, in dem die Temperatur T über der Zeit t aufgetragen ist. Die in dem Diagramm eingezeichnete Temperatur T bezieht sich auf die Temperatur der Luft in dem Kompressor. Der Fig.2 ist ein durchgezogener Graf 16 und ein strichlinierter Graf 18 zu entnehmen. Der Graf 16 gibt den Zusammenhang zwischen der Temperatur T und der Zeit t wieder, wie er gemäß einem Temperaturmodell in der Steuereinheit 6 der Luftfederungsanlage berechnet wird (s. Fig.1). Der Graf 18 gibt wieder, wie zwischen dem unteren Temperaturgrenzwert Tu und dem oberen Temperaturgrenzwert To der mittlere Temperaturgradient für den Grafen 16 ist (d.h., dass die Grafen 16 und 18 an dem unteren und oberen Temperaturgrenzwerten jeweils gemeinsame Punkte aufweisen). Im Folgenden wird für die Laufzeiten und die Ausschaltzeiten des Kompressors auf den Temperaturgradienten abgestellt, da der Temperaturverlauf zwischen den Temperaturgrenzwerten für die nachfolgenden Betrachtungen nicht relevant ist.

Zum Zeitpunkt t = 0 weist diese Temperatur einen Wert von ungefähr 25 °C, also Umgebungstemperatur auf. Die Umgebungstemperatur weist der Kompressor 4 auf, wenn er nach dem letzten Ausschalten für eine längere Zeit von 5 bis 15 Minuten nicht eingeschaltet worden ist. In diesem Fall hat sich die Luft in dem Verdichtungsraum des Kompressors bis auf die Umgebungstemperatur abgekühlt.

Zum Zeitpunkt t = 0 wird der Kompressor 4 durch die Steuereinheit 6 angesteuert und der erste Lauf des Kompressors 4 beginnt. In dem ersten Lauf (in dem Diagramm mit 1.L abgekürzt) bleibt der Kompressor 4 solange eingeschaltet, bis die in der Steuereinheit 6 berechnete Temperatur der Luft in dem Kompressor den oberen Grenzwert To (im gewählten Beispiel 180 °C) erreicht. Der Kompressor wird dann von der Steuereinheit 6 ausgeschaltet und der erste Lauf des Kompressors ist nach ca. 210 sec beendet.

Für den ersten Lauf ist der positive Temperaturgradient PTG wie folgt:

$$PTG\ 1.L = (To - Tu) / (t1o - t1u)$$

(siehe auch Diagramm).

Bei dem ersten Lauf des Kompressors 4 kann davon ausgegangen werden, dass sich die Bauteile des Kompressors, insbesondere der Kolben aus Kunststoff, genauso erwärmt, wie die Luft in dem Kompressor. Dies bedeutet, dass auch der Kolben des Kompressors zum Zeitpunkt des Abschaltens des Kompressors eine Temperatur von ungefähr 180 °C aufweist.

Nach dem Ausschalten des Kompressors 4 kühlt sich die Luft in dem Kompressor ab. In der Steuereinheit 6 wird berechnet, wie dies geschieht. Wenn die in der Steuereinheit 6 berechnete Temperatur den unteren Grenzwert Tu (der im gewählten Beispiel 100 °C ist) erreicht, steht der Kompressor 4 für den zweiten Lauf bereit. Dies ist nach ungefähr 330 sec der Fall. Der Kompressor 4 kann dann wieder von der Steuereinheit 6 eingeschaltet werden, damit er die Luftfedern 10 weiter befüllt werden können. Der Kompressor 4 bleibt im zweiten Lauf solange eingeschaltet, bis die in der Steuereinheit 6 berechnete Temperatur der Luft in dem Kompressor den oberen Grenzwert To von 180 °C erreicht. Dann wird der Kompressor 4 wieder ausgeschaltet.

Für den zweiten Lauf ist der positive Temperaturgradient, d. h., der Wert für den Temperaturanstieg/Zeit zwischen dem Grenzwert To und dem Grenzwert Tu wie folgt:

$$PTG\ 2.L = (To - Tu) / (t2o - t2u)$$

Das im Zusammenhang mit dem ersten Lauf und dem zweiten Lauf des Kompressors erläuterte Verfahren wiederholt sich solange, bis die Luftfedern 10 der Luftfederungsanlage wie gewünscht befüllt sind und der Kompressor 4 solange abgeschaltet werden kann, bis ein komplett neuer Regelvorgang (z.B. aufgrund der Beladung des Fahrzeuges) durchgeführt werden soll.

Die positiven Temperaturgradienten für die ersten n Läufe des Kompressors berechnen sich wie folgt:

$$PTG\ n.L = (To - Tu) / (tno - tnu);\ n = 1, 2, 3, 4,.....$$

mit:

To = oberer Temperaturgrenzwert

Tu = unterer Temperaturgrenzwert

tno = Zeitpunkt, zu dem im n-ten Lauf die berechnete Temperatur den Wert To erreicht

tnu = Zeitpunkt, zu dem im n-ten Lauf die berechnete Temperatur den Wert Tu erreicht

Für die ersten 4 Läufe des Kompressors (siehe Diagramm 2) gilt für die positiven Temperaturgrenzwerte folgendes:

$$PTG\ 1.L < PTG\ 2.L < PTG\ 3.L < PTG\ 4.L$$

Insbesondere ist also der positive Temperaturgradient für den ersten Lauf kleiner als der positive Temperaturgradient für die nachfolgenden Läufe des Kompressors. Dies liegt darin begründet, dass bei der ersten Laufzeit des Kompressors die Temperatur des Kolbens in dem Kompressor annähernd der Temperatur der Luft in dem Kompressor entspricht, die tatsächlich berechnet wird. Die erste Laufzeit kann deshalb besonders lang sein. Zusätzlich kann im 1.Lauf die Umgebungstemperatur des Kompressors berücksichtigt werden, die von Steuereinheit 12 an die Steuereinheit 6 weitergegeben wird. Zu Beginn des ersten Laufes wird vorausgesetzt, dass die Luft in dem Kompressor die gleiche Temperatur wie die gemessene Umgebungstemperatur aufweist. Für den 1. Lauf des Kompressors kann das Temperaturmodell, mit dem die Temperatur der Luft in dem Kompressor berechnet wird, dann in Abhängigkeit von der Umgebungstemperatur festgelegt werden. Dies erfolgt derart, dass der positive Temperaturgradient für den 1. Lauf umso kleiner ist, je niedriger die gemessene Umgebungstemperatur ist.

Nach der ersten Laufzeit, also während der ersten Ausschaltzeit (in dem Diagramm mit 1.A bezeichnet), sinkt die Temperatur der Luft in dem Kompressor. Das Sinken der Temperatur in dem Kompressor wird in der Steuereinheit 6 berechnet und der Kompressor kann wieder eingeschaltet werden, wenn die berechnete Temperatur den unteren Temperaturgrenzwert Tu erreicht. Da sich der Kunststoffkolben des Kompressors aber nicht genauso abkühlt wie die Luft, muss zu Beginn der zweiten Laufzeit (also zum Zeitpunkt t2u) davon ausgegangen werden, dass die Temperatur des Kunststoffkolbens oberhalb von Tu, also oberhalb von 100 °C liegt. Wie hoch die Temperatur des Kunststoffkolbens genau ist, kann nicht abgeschätzt werden. Die zweite Laufzeit des Kompressors 4 wird erfindungsgemäß kürzer gewählt als die erste Laufzeit des Kompressors 4, um der erhöhten Temperatur des Kunststoffkolbens des Kompressors zu Beginn der zweiten Laufzeit Rechnung zu tragen. Dementsprechend ist der positive Temperaturgradient PTG2 größer als der positive Temperaturgradient PTG1 der ersten Laufzeit. Für die nachfolgenden Läufe des Kompressors werden die Laufzeiten des Kompressors immer stärker verkürzt, um der zunehmenden Entkopplung zwischen Erwärmung bzw. Abkühlung der Luft in dem Kompressor und Erwärmung bzw. Abkühlung des Kunststoffkolbens des Kompressors Rechnung zu tragen.

Die negativen Temperaturgradienten für die Ausschaltzeiten des Kompressors (in denen der Kompressor 4 also nicht läuft und die Luft in dem Kompressor abkühlen kann) bestimmen sich wie folgt:

$$NTGn.A = (Tu - To) / (tn{+}1u{-}tno); n = 1, 2, 3, 4,\ldots\ldots$$

mit

To = oberer Temperaturgrenzwert

Tu = unterer Temperaturgrenzwert

tn+lu = Ende der n-ten Ausschaltzeit bzw. Beginn der n+1 ersten Laufzeit

tno = Anfang der n-ten Ausschaltzeit bzw. Ende der n-ten Laufzeit

Für die negativen Temperaturgradienten der n ersten Ausschaltzeiten gilt folgendes:

$$NTG1.A < NTG2.A < NTG3.A < NTG4.A$$

Insbesondere ist der negative Temperaturgradient NTG 1.A für die erste Ausschaltzeit des Kompressors kleiner als die negativen Temperaturgradienten für die nachfolgenden Ausschaltzeiten. Darüber hinaus steigen die negativen Temperaturgradienten für die n ersten Ausschaltzeiten schrittweise an, was sich auch aus der obigen Beziehung ergibt. Der schrittweise Anstieg der negativen Temperaturgradienten in den Ausschaltzeiten des Kompressors bedeutet, dass die Ausschaltzeiten des Kompressors schrittweise verlängert werden. Durch diese Verlängerung der Ausschaltzeiten wird der Entwicklung Rechnung getragen, dass der Kunststoffkolben des Kompressors zunehmend lange Zeit benötigt, um sich auf die Temperatur der Luft in dem Kompressor abzukühlen.

Dem Diagramm gemäß Fig. 3 ist zu entnehmen, dass ab dem 5. Lauf bzw. der 5. Ausschaltzeit des Kompressors 4 die weiteren Kompressorlaufzeiten 5, 6, 7 usw. alle gleich lang sind. Das gleiche gilt für die Ausschaltzeiten 5, 6, 7 usw., die ebenfalls alle gleich lang sind. Dementsprechend werden während dieser Laufzeiten bzw. Ausschaltzeiten des Kompressors die gleichen positiven Temperaturgradienten bzw. negativen Temperaturgradienten gewählt. Hierdurch wird berücksichtigt, dass sich der Temperaturverlauf in dem Kompressor in einem "eingeschwungenen Zustand" befindet.

**Bezugszeichenliste**

(Teil der Beschreibung)

| | |
|---|---|
| 2 | Luftfederungsanlage |
| 4 | Kompressor |
| 6 | Steuereinheit |
| 8 | Versorgungsleitungen |
| 10 | Luftfedern |
| 12 | Steuereinheit |
| 14 | Temperatursensor |
| 16 | Graf |
| 18 | Graf |

**Patentansprüche**

1. Verfahren zur Steuerung eines bedarfsabhängig ein- und ausschaltbaren Kompressors (4) einer Luftfederungsanlage eines Kraftfahrzeuges, mit dem Luftfedern (10) der Luftfederungsanlage befüllbar sind, bei dem

- die Temperatur der in dem Kompressor (4) verdichteten Luft nach einem Temperaturmodell berechnet wird, und
- der eingeschaltete Kompressor (4) maximal solange eingeschaltet bleibt, bis die berechnete Temperatur der verdichteten Luft auf einen ersten Grenzwert angestiegen ist, und
- der ausgeschaltete Kompressor (4) frühestens dann wieder einschaltbar ist, wenn die berechnete Temperatur der Luft in dem Kompressors (4) auf einen zweiten Grenzwert abgesunken ist,

**dadurch gekennzeichnet, dass**

- in dem Verfahren ein erster Lauf für den Kompressor (4) festgelegt ist, der **dadurch** definiert ist, dass die Luft in dem Kompressor (4) zu Beginn des ersten Laufes die Temperatur der Umgebung des Kompressors (4) aufweist, und dass
- für den ersten Lauf des Kompressor (4)s für die Berechnung der Temperatur der Luft in dem Kompressor (4) ein anderes Temperaturmodell zugrunde gelegt wird als für die nachfolgenden Läufe des Kompressors (4).

2. Verfahren nach Anspruch 1, **dadurch gekennzeichnet, dass** für den ersten Lauf des Kompressors (4) der positive Temperaturgradient , d.h. der Wert für den Temperaturanstieg / Zeit, zwischen dem zweiten Grenzwert und dem ersten Grenzwert kleiner gewählt wird als für die nachfolgenden Läufe des Kompressors (4).

3. Verfahren nach Anspruch 2, **dadurch gekennzeichnet, dass** der positive Temperaturgradient für die n ersten Läufe des Kompressors (4) schrittweise ansteigt.

4. Verfahren nach Anspruch 2, **dadurch gekennzeichnet, dass** der positive Temperaturgradient ab dem n+1 Lauf des Kompressors (4) konstant gehalten wird.

5. Verfahren nach einem der Ansprüche 1 bis 4, **dadurch gekennzeichnet, dass** bei dem Verfahren davon ausgegangen wird, dass die Luft in dem Kompressor (4) die Temperatur der Umgebung des Kompressors (4) aufweist, wenn der ausgeschaltete Kompressor (4) für eine bestimmte Zeit nicht wieder eingeschaltet wird.

6. Verfahren nach einem der Ansprüche 2 bis 5, **dadurch gekennzeichnet, dass** die Umgebungstemperatur mit einem Steuergerät des Kraftfahrzeuges gemessen wird und dass das Temperaturmodell für den ersten Lauf des Kompressors (4) in Abhängigkeit von der Umgebungstemperatur festgelegt wird.

7. Verfahren nach einem der Ansprüche 1 bis 6 , **dadurch gekennzeichnet, dass** für die erste Ausschaltzeit des Kompressors (4) für die Berechnung der Temperatur der Luft in dem Kompressor (4) ein anderes Temperaturmodell zugrunde gelegt wird als für die nachfolgenden Ausschaltzeiten des Kompressors (4).

8. Verfahren nach Anspruch 7, **dadurch gekennzeichnet, dass** für die erste Ausschaltzeit des Kompressors (4) der negative Temperaturgradient, d.h. der Wert für die Temperaturabnahme/Zeit, zwischen dem ersten Grenzwert und dem zweiten Grenzwert kleiner gewählt wird als für die nachfolgenden Ausschaltzeiten des Kompressors (4).

9. Verfahren nach Anspruch 8, **dadurch gekennzeichnet, dass** der negative Temperaturgradient für die n ersten Ausschaltzeiten des Kompressors (4) schrittweise ansteigt.

10. Verfahren nach Anspruch 2, **dadurch gekennzeichnet, dass** der negative Temperaturgradient ab der n+1 Ausschaltzeit des Kompressors (4) konstant gehalten wird.

11. Luftfederungsanlage für ein Kraftfahrzeug mit einem Kompressor (4), mit dem die Luftfedern der Luftfederungsanlage befüllbar sind, **dadurch gekennzeichnet, dass** die Luftfederungsanlage ein Steuergerät aufweist, mit dem das Verfahren nach einem der Ansprüche 1 bis 10 durchführbar ist.

**Claims**

1. Method for controlling a compressor (4), which can be switched on and off on demand, of an air suspension system of a motor vehicle, with which air springs (10) of the air suspension system can be filled, in which,

   - the temperature of the air which is compressed in the compressor (4) is calculated according to a temperature model, and
   - the switched-on compressor (4) remains switched on at maximum until the calculated temperature of the compressed air has risen to a first limiting value, and
   - the switched-off compressor (4) can be switched on again at the earliest when the calculated temperature of the air in the compressor (4) has dropped to a second limiting value,

   **characterized in that**

   - in the method a first run for the compressor (4) is specified and is defined by virtue of the fact that the air in the compressor (4) at the start of the first run is at the temperature of the surroundings of the compressor (4),

   and **in that**

   - a different temperature model is used as the basis for the first run of the compressor (4) for the calculation of the temperature of the air in the compressor (4) than for the subsequent runs of the compressor (4).

2. Method according to Claim 1, **characterized in that** for the first run of the compressor (4) a lower value is selected for the positive temperature gradient, i.e. the value for the rise in temperature/time between the second limiting value and the first limiting value than for the subsequent runs of the compressor (4).

3. Method according to Claim 2, **characterized in that** the positive temperature gradient for the n first runs of the compressor (4) rises incrementally.

4. Method according to Claim 2, **characterized in that** the positive temperature gradient is kept constant from the n+1 run of the compressor (4).

5. Method according to one of Claims 1 to 4, **characterized in that** in the method it is assumed that the air in the compressor (4) is at the temperature of the surroundings of the compressor (4) if the switched-off compressor (4) is not switched on again for a specific time.

6. Method according to one of Claims 2 to 5, **characterized in that** the temperature of the surroundings is measured with a control unit of the motor vehicle, and **in that** the temperature model for the first run of the compressor (4) is specified as a function of the temperature of the surroundings.

7. Method according to one of Claims 1 to 6, **characterized in that** for the first switched-off time of the compressor (4) a different temperature model is used as the basis for the calculation of the temperature of the air in the compressor (4) than for the subsequent switched-off times of the compressor (4).

8. Method according to Claim 7, **characterized in that** for the first switched-off time of the compressor (4) a lower value is selected for the negative temperature gradient, i.e. the value for the decrease in temperature/time, between the first limiting value and the second limiting value than for the subsequent switched-off times of the compressor (4).

9. Method according to Claim 8, **characterized in that** the negative temperature gradient for the n first switched-off times of the compressor (4) rises incrementally.

10. Method according to Claim 2, **characterized in that** the negative temperature gradient is kept constant from the n+1 switched-off time of the compressor (4).

11. Air suspension system for a motor vehicle having a compressor (4) with which the air springs of the air suspension system can be filled, **characterized in that** the air suspension system has a control unit with which the method according to one of Claims 1 to 10 can be carried out.

**Revendications**

1. Procédé de commande d'un compresseur (4) qui peut être branché et débranché en fonction des besoins dans une installation de suspension pneumatique d'un véhicule automobile et par lequel les amortisseurs pneumatiques (10) de l'installation de suspension pneumatique peuvent être remplis, tandis que dans le procédé:

   - la température de l'air comprimé dans le compresseur (4) est calculée en fonction d'un modèle de température,
   - le compresseur branché (4) reste branché au plus tard jusqu'à ce que la température calculée de l'air comprimé soit montée jusqu'à une première valeur limite et
   - le compresseur débranché (4) ne peut être rebranché qu'au plus tôt lorsque la température calculée de l'air dans le compresseur (4) est descendue à une deuxième valeur limite,

   **caractérisé en ce que**

   - dans le procédé, une première course du compresseur (4) est définie par le fait que l'air présent dans le compresseur (4) présente au début de la première course la température de l'environnement du compresseur (4) et **en ce que**
   - pour le calcul de la température de l'air dans le compresseur (4), on utilise pour les courses suivantes du compresseur (4) un autre modèle de température que pour la première course du compresseur (4).

2. Procédé selon la revendication 1, **caractérisé en ce que** pour la première course du compresseur (4), le gradient positif de température, c'est-à-dire la valeur de l'augmentation de température en fonction du temps, entre la deuxième valeur limite et la première valeur limite est plus petit que pour les courses suivantes du compresseur (4).

3. procédé selon la revendication 2, **caractérisé en ce que** le gradient positif de température augmente par pas sur les n premières courses du compresseur (4).

4. Procédé selon la revendication 2, **caractérisé en ce que** le gradient positif de température est maintenu constant à partir de la course n + 1 du compresseur (4).

5. Procédé selon l'une des revendications 1 à 4, **caractérisé en ce que** le procédé part de l'hypothèse que l'air présent dans le compresseur (4) présente la température de l'environnement du compresseur (4) lorsque le compresseur débranché (4) n'a pas été rebranché pendant une certaine durée.

6. Procédé selon l'une des revendications 2 à 5, **caractérisé en ce que** la température ambiante est mesurée à l'aide d'un appareil de commande du véhicule automobile et **en ce que** le modèle de température de la première course du compresseur (4) est défini en fonction de la température ambiante.

7. Procédé selon l'une des revendications 1 à 6, **caractérisé en ce que** pour le calcul de la température de l'air dans le compresseur (4), on se base pour le premier instant de débranchement du compresseur (4) sur un autre modèle de température que pour les instants suivants de débranchement du compresseur (4).

8. Procédé selon la revendication 7, **caractérisé en ce que** pour le premier instant de débranchement du compresseur (4), le gradient négatif de température, c'est-à-dire la valeur de la diminution de température en fonction du temps entre la première valeur limite et la deuxième valeur limite, est sélectionné à une valeur plus petite que pour les instants suivants de débranchement du compresseur (4).

**9.** Procédé selon la revendication 8, **caractérisé en ce que** le gradient négatif de température augmente par pas sur les n premiers instants de débranchement du compresseur (4).

**10.** Procédé selon la revendication 2, **caractérisé en ce que** le gradient négatif de température est maintenu constant à partir de l'instant de débranchement n + 1 du compresseur (4).

**11.** Installation de suspension pneumatique pour véhicule automobile, dotée d'un compresseur (4) par lequel les amortisseurs pneumatiques de l'installation de suspension pneumatique peuvent être remplis, **caractérisée en ce que** l'installation de suspension pneumatique présente un appareil de commande qui permet d'exécuter le procédé selon l'une des revendications 1 à 10.

FIG. 1

EP 2 057 024 B1

# FIG. 2

EP 2 057 024 B1

FIG.3

EP 2 057 024 B1

13

**EP 2 057 024 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• DE 19621946 C2